# EUROPEAN PATENT APPLICATION

(11) **EP 3 130 826 A1**
(43) Date of publication of application: **15.02.2017**
(21) Application number: 15275186.3
(22) Date of filing: 14.08.2015
(51) Int. Cl.: F16J 15/3208, F16J 15/3212

(54) **SEAL**

(71) Applicant: Claverham Limited, Claverham Bristol BS49 4NF (GB)
(72) Inventor: BREWER, Paul, Bristol, BS31 2NB (GB); RAVAL, Reg, Bristol, BS49 4QY (GB)
(74) Representative: Gardiner, Stephen Robin

(57) **Abstract**

A seal comprising: a seal cap that provides a sealing surface; an elastomeric energizer; and a shape memory alloy structure; wherein the combination of the shape memory alloy structure and the elastomeric energizer is arranged to provide a sealing force to the seal cap; and wherein the shape memory alloy is arranged to change shape with temperature such that for a predetermined temperature range it compensates for changes in the elasticity of the elastomeric energizer so as to maintain the preload force on the seal cap. As temperature increases, a number of system properties change. Firstly, the elastomeric energizer loses elasticity, becoming softer and providing less preload to the seal cap. Also, the fluid that is being sealed becomes less viscous and able to fit through smaller gaps. In high pressure aircraft systems, the highest ambient temperatures typically occur on the ground and thus are also associated with the lowest system pressures when the aircraft systems are off. This combination means that in the absence of any compensating mechanism, sealing efficiency can reduce significantly with increasing temperature. However, with a seal according to this disclosure, the shape memory alloy structure compensates for these changes by changing shape so that the overall preload on the seal cap is maintained. Therefore as the elastomeric energizer becomes softer, the shape memory alloy structure compresses it more so that the overall preload force is maintained (the preload force being proportional to the compression of the elastomer).

## Description

### Technical Field

This disclosure relates to seals for sealing rotating or reciprocating shafts within a cylindrical bore. In particular, the disclosure relates to hydraulic actuators, for use in aerospace applications.

### Background

In any friction-based sealing arrangement, a balance has to be struck between the sealing ability and the resistance to movement due to friction. It is desirable to have the most effective seal possible (i.e. the greatest ability to prevent fluid from passing the seal) while it is also desirable to have the lowest possible friction for efficient operation and reduced wear. However these are competing goals. Although choices of material can improve the effectiveness of the seal, the seal will always be dependent to some extent on the force applied between the seal and the opposing surface. A higher force results in more effective sealing, but greater resistance due to friction. A lower force results in lower resistance due to friction, but with a compromise on the sealing ability. For a given sealing application, the design will therefore involve a decision on the optimum sealing force.

Some seals are required to operate effectively across a large temperature range. For example, some hydraulic actuators in the aerospace industry have to cope with exposure to very low temperatures during high altitude flight (e.g. -40 degrees centigrade) while also having to cope with exposure to high temperatures while stationary on the ground in direct sun (in hot countries, temperatures can easily reach in excess of 40 degrees centigrade in direct sun). In some cases, seals can also be located adjacent to other hot components like engines. When running on the ground with no airflow to remove heat, these seals may be exposed to temperatures up to 140 degrees centigrade for example. Thus a large temperature range needs to be accommodated. Furthermore, the working fluid temperature can be in the range of 30 deg C to 90 deg C depending on the aircraft cooling system setting within the fluid circuit.

In high pressure applications such as hydraulic actuator rods in aircraft, the temperature problem is compounded by changes in pressure. The seal must be capable of sealing during high pressure operation (i.e. during flight) at pressures in excess of 1000 pounds per square inch (psi) (and typically above 2000 psi, e.g. 3000-4000 psi). However, when the system is switched off (e.g. when the aircraft is parked on the ground), the pressure reduces to the reservoir pressure level that is usually around 50 psi. High pressure seals rely to some extent on the fluid pressure itself to create some of the sealing force. Therefore at lower pressures, the sealing force is also reduced and the seal may well be more susceptible to leakage in this state. This problem may not be present in lower pressure applications such as automotive rotary seals which typically only operate at much lower pressures in the region of 20 to 30 psi. The seals for these applications are usually optimized around this narrow band of fluid pressure.

In the aircraft industry, seal performance is of particular importance where the seals are required to operate under a much wider band of temperature and pressure level. Failure of a seal during flight could result in failure of important safety-critical systems with potentially disastrous consequences. Equally, the effectiveness of a seal on the ground has implications for maintenance and lifetime. For example, a seal that is design for optimum performance at cold temperatures (e.g. as might be experienced in an aircraft during flight) might be at the limits of its performance in hotter temperatures (e.g. as might be experienced in an aircraft on the ground) to the extent that a small amount of leakage may occur in the latter situation. Such leakage may be safety critical and require immediate replacement of the seal (or possibly replacement of the whole actuator). Even in situations where the leakage is so small that it is not safety critical, if any leakage is observed (e.g. as little as a few drops), replacement may be deemed necessary by an inspection or maintenance crew. This may be because accumulated small leaks will eventually result in a significant fluid loss, but even where other safety checks can confirm this is not the case, the perceived risk is often over-estimated or over-compensated in order to maintain the highest possible standards and minimise risks.

Thus the improvement of seal efficiency across a wide temperature range is desirable in order to improve safety and to improve component lifetimes (e.g. as measured by the mean time between failure) and thus reduce costs. One way to achieve improved sealing efficiency is simply to increase the force applied to the seal, but as discussed above this results in increased friction which in turn increased wear and thus may not in fact lead to increased component lifetime or cost savings.

Shape Memory Alloy (SMA) materials are of interest in applications involving temperature ranges as the SMA material properties change with temperature. For example at low temperature, the SMA takes a more flexible form known as the martensitic state, while at higher temperatures it changes state to a more rigid form known as the austenitic state. SMAs exhibit shape memory such that heating and cooling of the material leads to changes of shape. With two-way memory, the material can have both a high temperature shape and a low temperature shape and moves between them as the temperature changes.

Shape Memory Alloys (SMAs) have been used in some seal designs for various reasons. For example, in US2002/0074742, SMA is used to hold a non-sealing shape while the seal is installed and is then reverted back to a sealing shape once it has been installed. US8602419 describes a rotary seal designed for low pressure automotive applications in which a shape memory alloy element constricts around a compressible seal body to seal against a shaft.

### Summary

According to this disclosure there is provided a seal comprising: a seal cap that provides a sealing surface; an elastomeric energizer; and a shape memory alloy structure; wherein the combination of the shape memory alloy structure and the elastomeric energizer is arranged to provide a sealing force to the seal cap; and wherein the shape memory alloy is arranged to change shape with temperature such that for a predetermined temperature range it compensates for changes in the elasticity of the elastomeric energizer so as to maintain the preload force on the seal cap.

The seal cap provides the surface that actually performs the sealing function against another surface (e.g. against a cylinder wall or against the surface of a piston shaft). The material and properties of the seal cap can be selected for maximum sealing performance. However, the preload force that is applied to the seal cap is also important and this is determined both by the properties of the elastomeric energizer and the properties of the shape memory alloy structure. The elastomeric energizer is normally in a compressed state when the seal is installed so that it provides a biasing force that presses the seal cap against the opposing surface. It is this biasing force that also determines the frictional resistance as the seal cap moves with respect to the sealing surface. The frictional force is thus desirably the minimum that is required to achieve the necessary sealing performance.

The seal is preferably suitable for aerospace applications, particularly safety critical applications where there is a much wider range of pressure level to be accommodated. The seal assembly is preferably housed within a deep groove to ensure stability (no extrusion) at the much higher pressures (typically 4000 psi).

As the temperature increases, a number of properties of the system change. Firstly, the elastomeric energizer loses elasticity, becoming softer and providing less preload force to the seal cap. At the same time, the fluid (for example oil) that is being sealed becomes less viscous, i.e. more runny and able to fit through smaller gaps. In high pressure aircraft systems, the highest ambient temperatures typically occur on the ground and thus are also associated with the lowest system pressures when the aircraft systems are off. The combination of these factors means that in the absence of any compensating mechanism, the sealing efficiency can reduce significantly with increasing temperature. However, with a seal according to this disclosure, the shape memory alloy structure is arranged to compensate for these changes by changing shape so that the overall preload on the seal cap is maintained. Therefore as the elastomeric energizer becomes softer, the shape memory alloy structure compresses it more so that the overall preload force is maintained (the preload force being proportional to the compression of the elastomer).

The elastomeric energizer and the shape memory alloy structure may be positioned either way around, i.e. with either one adjacent to the seal cap. However, the preferred arrangement is where the elastomeric energizer is located adjacent to the seal cap. The elastomeric energizer is the softest and most malleable part of the seal and thus there is minimal wear between it and the harder seal cap and shape memory alloy structure. Thus in a preferred arrangement, the elastomeric energizer is interposed between the seal cap and the shape memory alloy structure.

In another arrangement, the elastomeric energizer may surround the shape memory alloy structure. With the shape memory alloy completely surrounded (e.g. moulded into the energizer), it experiences no contact and thus no wear against other parts of the seal structure such as a seal seat or groove. It also remains supported firmly in place by the energizer as its shape changes with temperature.

Although the sealing arrangement may be applied to static seals, i.e. those where the seal cap and opposed surface do not move relative to one another, the seal is preferably a dynamic seal. In a dynamic seal, the seal cap moves relative to the opposed surface which makes sealing a more difficult task (typically requiring that a higher preload force be maintained between the two contacting surfaces). The arrangements described herein are particularly applicable to maintaining that preload and thus are particularly suited to dynamic seals. More particularly the seal is preferably a reciprocating seal. Reciprocating seals are more prone to breakdown or leakage than rotary seals and thus suffer the effects of high temperature and/or low pressure more keenly.

The sealing arrangement may be used in any context, but is preferably a shaft seal, i.e. one that seals around a shaft such as a reciprocating shaft or a rotating shaft. Examples of different shafts may include piston shafts, drive shafts or actuator shafts. The arrangements described here are particularly applicable in the aerospace industry or other industries with very high safety requirements. As such, it is particularly well suited to actuator shafts in aircraft, most particularly to reciprocating actuators.

The seal may be formed either on the inside of a cylinder (and sealing against the outer surface of a shaft that moves within the cylinder), but in its most preferred arrangements the seal is formed in a circumferential groove of the shaft, thus sealing against the inner surface of the corresponding cylinder. In this arrangement, the shape memory alloy will be required to change shape such that it expands away from the shaft with increasing temperature so as to pressurize the seal cap radially outwardly and towards the opposing sealing surface as the temperature increases.

The shape memory alloy may take a number of different structural forms. In some examples it may take the form of a split ring that expands and/or contracts with changes in temperature, i.e. so that the gap formed at the split increases or decreases in size, thus forming a C-shape with a varying diameter. Alternatively, the shape memory alloy structure may take the form of a ring with a cross-sectional shape that changes with temperature, e.g. having a smaller radial dimension at lower temperatures and a larger radial dimension at higher temperatures. The structure may have a correspondingly larger axial dimension at lower temperatures and smaller axial dimension at higher temperatures. In one particularly advantageous form, the shape memory alloy structure may have a wave form that undulates in a circumferential direction around the shaft, periodically increasing and decreasing in radius. The wave form allows the shape memory alloy structure to press in both radial directions (i.e. radially inwardly and radially outwardly). For example, the shape change may be a compression of the wave (i.e. a reduction in the wavelength) that results in a higher wave amplitude (greater radial distance between the peaks and troughs) so as to press the seal cap in a radial direction (optionally via the elastomeric energizer). This arrangement provides a stable structure and ensures good contact and even pressure is maintained.

In some preferred examples the shape memory alloy structure is arranged to change shape with temperature such that for a predetermined temperature range it additionally compensates for changes in the separation of the parts to be sealed so as to maintain the preload force on the seal cap. Depending on the materials used and the temperatures involved, there may be no significant thermal expansion to compensate. However, where there is a significant thermal expansion it is desirable to accommodate this with the shape adjustment of the shape memory alloy so that the preload on the seal cap is maintained throughout the desired temperature range.

In some examples, several shape memory alloy structures may be provided, each having different shape-temperature profiles. This plurality of SMA structures can be selected so that the combination of shape changes together fits the desired force compensating profile for the seal as closely as possible.

As discussed above, the seal may be a reciprocating seal. The seal may be a hydraulic actuator seal. The seal may be a high pressure seal, preferably capable of operation above 1000 psi, more preferably above 2000 psi, more preferably still above 3000 to 4000 psi.

According to another aspect, this disclosure provides a high pressure reciprocating aerospace actuator rod comprising a seal as described above, optionally including any or all of the preferred features also described above.

### Brief description of drawings

One or more non-limiting examples will now be described, by way of example only, and with reference to the accompanying figures in which:
Fig. 1 shows a conventional seal arrangement;
Fig. 2 illustrates an example of a seal with shape memory alloy structure;
Fig. 3 shows another example with SMA embedded in energizer;
Fig. 4 shows a wave-formed SMA structure;
Figs. 5a and 5b illustrate an example shape change of the SMA;
Figs. 6a and 6b illustrate another example shape change of the SMA;
Fig 6c illustrates a variation of the example of Figs. 6a and 6b.

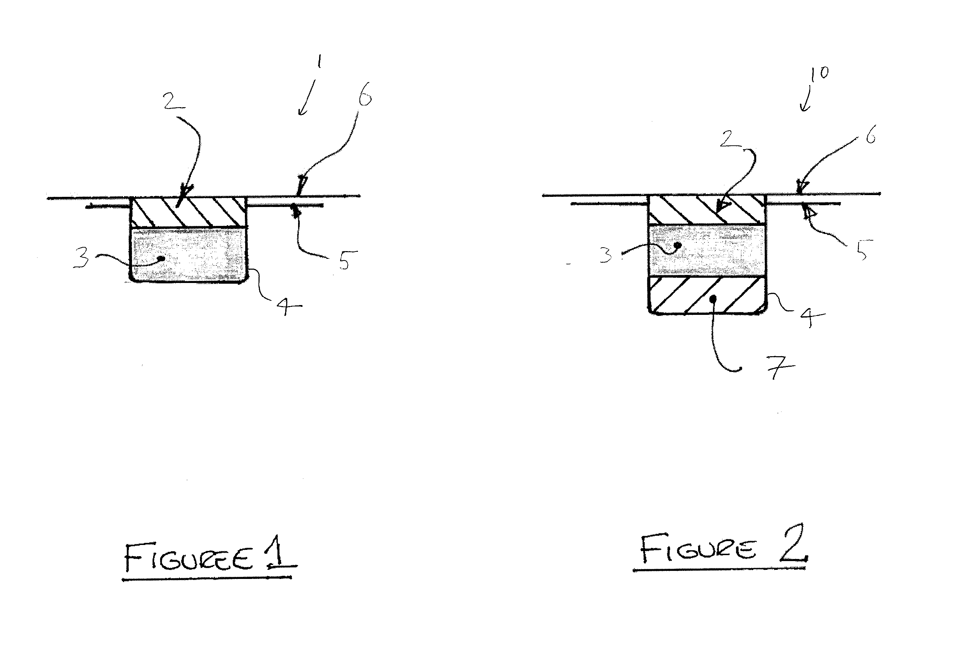

Figure 1 shows a cross-section of a conventional reciprocating aerospace actuator seal 1 comprising a seal cap 2 preferably made from a low friction material such as PTFE and an elastomeric energizer 3 seated in a groove 4 of a piston 5. The energizer provides a preload force that biases the seal cap 2 against the inner wall of cylinder 6 so as to form a seal. The seal cap and energizer form rings around the piston 5 which is typically of circular cylindrical construction.

Figure 2 is similar to Figure 1, but shows an example of a reciprocating aerospace actuator seal 10 according to this disclosure with a shape memory alloy structure 7 also disposed in the groove 4 of piston 5. The SMA structure 7 in this example is disposed underneath the elastomeric energizer ring 3. The energizer 3 is thus disposed in between the SMA structure 7 and the seal cap 2. It will be appreciated that in other examples the SMA structure 7 could be disposed adjacent to the seal cap 2, sandwiched between the seal cap 2 and the energizer 3. As can be seen in Figure 2, the SMA structure 7 fills the width of the groove 4 and thus any change in shape will result in an increase in the radial dimension so as to push the elastomeric energizer radially outwardly. Thus as the temperature increases, the energizer 3 is squeezed harder between the expanding SMA structure 7 and the seal cap 2. The energizer 3 thus provides an increased spring force that compensates for the reduction in elasticity which occurs with the rising temperature.

The properties of the SMA material are selected carefully to match the temperature range over which the seal is to operate and to match the measured change in elasticity (and corresponding reduction in spring force) of the energizer 3. The SMA material properties can be carefully controlled by careful selection of the alloy materials and by careful selection of the alloy proportions. Additionally, both the high and low temperature shapes of the SMA material can be carefully selected so that the transition with temperature from one shape to another matches the required increase in preload that will compensate for the change in the properties of energizer 3.

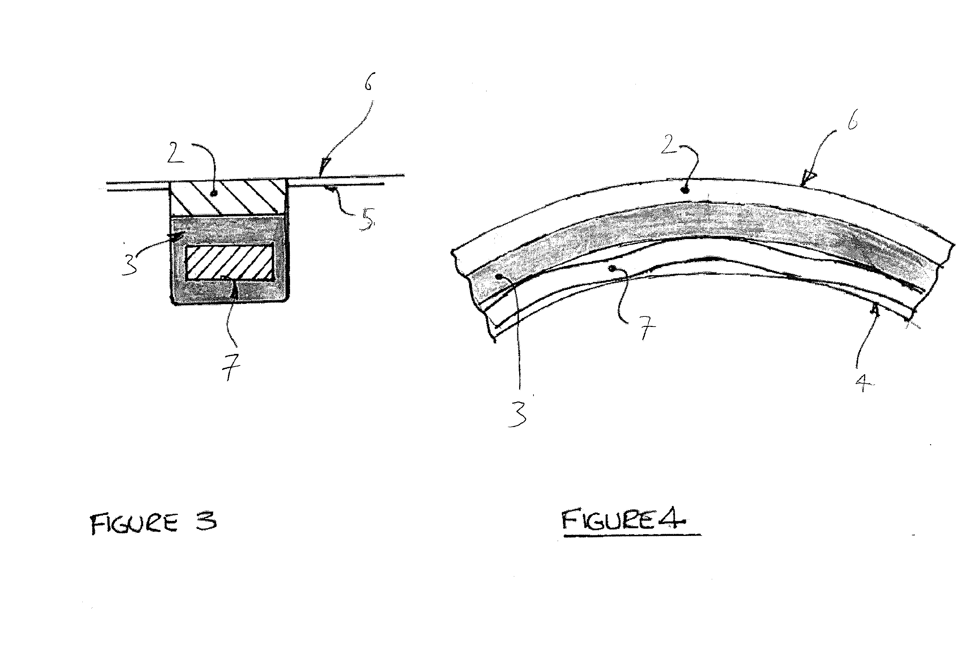

Figure 3 shows another example of seal 20 in which the SMA structure 7 is embedded completely within the elastomeric energizer 3. The SMA structure 7 is preferably formed first and then the energizer 3 is moulded around the SMA structure 7. A particular advantage of this construction is that it provides a single component to be inserted into the groove 4 for a very fast and simple installation or replacement operation.

Figure 4 shows a further example in which the SMA structure 7 is formed into a wave shape that undulates around the circumference of the piston shaft 5, periodically increasing and decreasing in radius. With this arrangement, as the wave formed SMA structure 7 changes shape, it presses against both the bottom of the seal groove 4 (i.e. against the piston 5) and against the elastomeric energizer 3 above it, pushing the two apart.

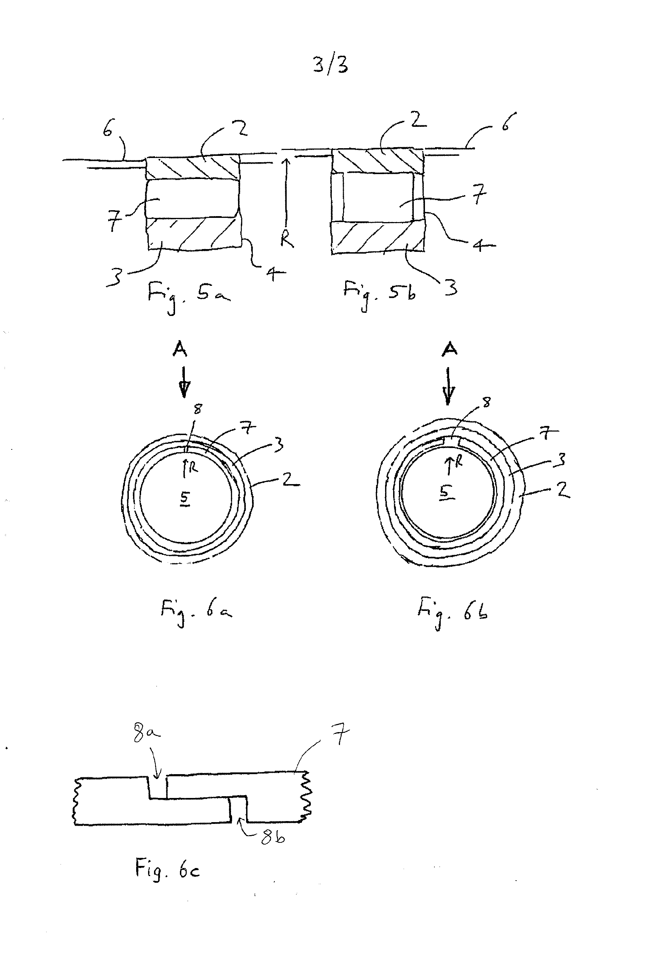

Figures 5a and 5b illustrate one example of how the SMA structure 7 of Figures 2 and 3 might change so as to increase the radial dimension R as the temperature increases. Figs. 5a and 5b show an example where the SMA structure 7 is interposed between the energizer 3 and the seal cap 2, but the principle illustrated here applies equally where the energizer 3 is in the middle (as in Fig. 2) or where the energizer 3 is moulded around the SMA material 7 (Fig. 3).

Figures 6a and 6b illustrate another example of how the SMA structure 7 of Figures 2 and 3 might change so as to increase the radial dimension R as the temperature increases. In Figs. 6a and 6b the SMA structure 7 is formed as a split ring. In Fig. 6a (low temperature) the gap 8 between the ends of the C-shaped split ring is small. In Fig. 6b (high temperature) the gap 8 has increased to from a C-shape with a larger radius such that the split ring 7 now sits slightly away from the bottom of the groove 4 of piston 5.

Figure 6c shows a variation of the example depicted in Figures 6a and 6b. Figure 6c is a view of the SMA ring structure 7 viewed from the direction of arrow A in Figures 6a and 6b. Here, instead of a gap breaking the ring of SMA 7 completely, the ring 7 is overlapped with itself and the gap is formed as two partial gaps 8a, 8b either side of the overlap region. This arrangement has two advantages, namely that it provides labyrinth sealing and it provides continuous support for the elastomeric energizer 3 above it (radially outwardly of it).

## Claims

1. A seal comprising:
a seal cap that provides a sealing surface;
an elastomeric energizer; and
a shape memory alloy structure;
wherein the combination of the shape memory alloy structure and the elastomeric energizer is arranged to provide a sealing force to the seal cap; and
wherein the shape memory alloy is arranged to change shape with temperature such that for a predetermined temperature range it compensates for changes in the elasticity of the elastomeric energizer so as to maintain the preload force on the seal cap.

2. A seal as claimed in claim 1, wherein the elastomeric energizer is located adjacent to the seal cap.

3. A seal as claimed in claim 2, wherein the elastomeric energizer is interposed between the seal cap and the shape memory alloy structure.

4. A seal as claimed in claim 1, wherein the elastomeric energizer surrounds the shape memory alloy structure.

5. A seal as claimed in any preceding claim, wherein the seal is a dynamic seal.

6. A seal as claimed in any preceding claim, wherein the seal is a shaft seal.

7. A seal as claimed in claim 6, wherein the seal is formed in a circumferential groove of the shaft.

8. A seal as claimed in claim 6 or 7, wherein the shape memory alloy structure has a wave form that undulates in a circumferential direction around the shaft.

9. A seal as claimed in any preceding claim, wherein the shape memory alloy structure is arranged to change shape with temperature such that for a predetermined temperature range it additionally compensates for changes in the separation of the parts to be sealed so as to maintain the preload force on the seal cap.

10. A seal as claimed in any preceding claim, wherein the shape memory alloy is arranged to provide temperature compensation across the range from -40 degrees centigrade to 130 degrees centigrade.

11. A seal as claimed in any preceding claim, comprising a plurality of shape memory alloy structures, each having different shape-temperature profiles.

12. A seal as claimed in any preceding claim, wherein the seal is a reciprocating seal.

13. A seal as claimed in any preceding claim, wherein the seal is a hydraulic actuator seal.

14. A seal as claimed in any preceding claim, wherein the seal is a high pressure seal.

15. A high pressure reciprocating aerospace actuator rod comprising a seal as claimed in any preceding claim.
